# EUROPÄISCHE PATENTANMELDUNG

(11) **EP 2 000 960 A2**
(43) Veröffentlichungstag der Anmeldung: **10.12.2008**
(21) Anmeldenummer: 08010246.0
(22) Anmeldetag: 05.06.2008
(51) Int. Cl.: G06K 19/077, H01Q 1/38, H01Q 9/04, H01Q 1/22, E05B 73/00, G06F 21/00, G11B 20/00, G11B 23/00

(54) **Rotationsdatenträger mit Detektierplättchen**

(30) Priorität: 07.06.2007 DE 102007026984
(71) Anmelder: ASTRA Gesellschaft für Asset Management mbH & Co. KG, 30890 Barsinghausen (DE)
(72) Erfinder: Stobbe, Anatoli, 30890 Barsinghausen (DE); Knop, Werner Dr., 30974 Wennigsen (DE)
(74) Vertreter: Patentanwälte Thömen & Körner

(57) **Zusammenfassung**

Es wird ein Rotationsdatenträger (10) mit Detektierplättchen (12) beschrieben.

Das Detektierplättchen (12) besteht aus einem Chip (14) und einer mit dem Chip verbundenen magnetischen Koppelschleife (16), das auf dem zentralen, nicht beschichteten Bereich (20) des Datenträgers (10) angeordnet ist.

## Beschreibung

Die Erfindung betrifft einen Rotationsdatenträger mit einem Detektierplättchen nach dem Oberbegriff des Anspruchs 1.

Rotationsdatenträger mit einer metallischen Beschichtung sind als CDs, DVDs, Blue-Ray-DVDs und HD-DVDs bekannt. Sie dienen u. a. zur Speicherung urhebergeschützter Werke, wie Computerprogramme, Datensammlungen, Literatur-, Kunst-, Bild-, Musik-und Filmwerke mit teilweise erheblichem Wert.

Um Verluste von Einzelhandelsunternehmen und Leihstellen zu begrenzen oder die Registrierung verkaufter oder verliehener Waren zu erleichtern, ist es an sich bekannt, Waren mit Sicherungsetiketten zu versehen, die im Kassen- oder Verleihbereich nach Entrichtung des Kauf- oder Verleihpreises deaktiviert werden und/oder maschinell lesbare Inventaretiketten zu verwenden, die die maschinelle Registrierung verkaufter oder verliehener Waren ermöglichen.

Derzeit sind optisch lesbare Barcodes zur Registrierung im Kassen- oder Verleihbereich und Ein-Bit-Erfassungssysteme als Diebstahlssicherung im Ausgangsbereich Standard. Darüber hinaus werden auch zunehmend Funksyteme verwendet, die eine Registrierung oder Diebstahlssicherung über eine größere Distanz auch dann ermöglichen, wenn kein optischer Sichtkontakt zwischen dem Detektierplättchen an der Ware und einem Lesegerät besteht. Vorraussetzung für eine ausreichende Reichweite ist hierbei allerdings eine weitgehend ungedämpfte Umgebung des funkgestützten Detektierplättchens an der Ware.

Wegen der als Metallisierung für optische Sensoren ausgeführten Beschichtung von Rotationsdatenträgern, die gleichzeitig elektrisch leitfähig ist, ergeben sich allerdings Reichweitenprobleme beim Einsatz von funkgestützten Detektierplättchen auf dem Datenträger.

Der Erfindung liegt die Aufgabe zugrunde, bei funkgestützten Detektierplättchen auf einem Rotationsdatenträger mit einer metallischen Beschichtung die Vorraussetzungen für eine bedarfsweise Erhöhung der Lesereichweite zu schaffen.

Diese Aufgabe wird bei einem Rotationsdatenträger mit einem Detektierplättchen nach dem Oberbegriff des Anspruchs 1 durch die Merkmale dieses Anspruchs 1 gelöst.

Weiterbildungen und vorteilhafte Ausgestaltungen ergeben sich aus den Unteransprüchen.

Der Erfindung liegt die Überlegung zugrunde, dass durch eine induktive Koppelschleife die magnetischen Komponenten des elektromagnetischen Wechselfeldes im Nahfeld überwiegen und daher die Ausbreitung des elektromagnetischen Wechselfeldes durch metallische Gegenstände, im vorliegenden Fall die metallische Beschichtung des Datenträgers, im Nahfeld weniger beeinträchtigt wird, als bei Verwendung einer die elektrischen Komponenten bevorzugt abstrahlenden Antenne.

Das Detektierplättchen kann auf einer Kunststofffolie angeordnet sein, die mit dem Datenträger verklebt ist.

Dadurch kann jeder beliebige Rotationsdatenträger ohne Eingriff in dessen Herstellungsprozess und ohne Beeinträchtigung der üblichen Nutzung erfindungsgemäß ausgestattet werden.

Die Koppelschleife des Detektierplättchens kann mit einer Verstärkerantenne gekoppelt sein.

Über die Kopplung mit einer Verstärkerantenne, die eine rein passiv wirkende Komponente bildet, kann die Lesereichweite des Detektierplättchens wesentlich erhöht werden.

Die Verstärkerantenne kann als Dipolantenne ausgebildet sein.

Durch eine Dipolantenne kann über deren Design, insbesondere deren Länge und Form, in einfacher Weise eine exakte Anpassung der Resonanzfrequenz der Antenne an die Arbeitsfrequenz des Detektierplättchens und Lesegeräts vorgenommen werden, so dass die Antenne mit dem maximal möglichen Wirkungsgrad strahlen kann.

Die Dipolantenne ist vorzugsweise in einer Hülle oder Verpackung des Datenträgers angeordnet.

Durch die Gestaltung der Hülle oder Verpackung kann ein Abstand der Strahler der Dipolantenne von der Beschichtung des Datenträgers erreicht werden, der eine Verstimmung der Dipolantenne reduziert und so eine hinreichende Lesereichweite des Detektierplättchens ermöglicht. Weiterhin wird wahlweise eine geringe Lesereichweite des Detektierplättchens ohne Hülle oder Verpackung und eine hohe Lesereichweite des Detektierplättchens mit Hülle oder Verpackung ermöglicht.

Vorzugsweise befindet sich die Dipolantenne nicht sichbar auf einer Rückseite eines bedruckten Inlays der Hülle, auf der Rückseite der Halterung des Datenträgers in der Hülle oder auf einem zwischen der Halterung des Datenträgers und dem bedruckten Inlay der Hülle eingelegten Antennenträger.

Neben einem mechanischen Abstand von der Beschichtung des Datenträgers, der eine Reduzierung der Verstimmung durch Beschichtung bewirkt, wird die Dipolantenne auch optisch verborgen angeordnet, so dass ohne Öffnung der Hülle nicht erkennbar ist, ob der Datenträger mit der Hülle mit der Erfindung ausgestattet ist oder nicht.

Bei einer bevorzugten Ausgestaltung besteht die Dipolantenne aus einem im Zentrum oder nahe des Zentrums der Hülle oder Verpackung verlaufenden Koppelbereich und längs der Kanten der Hülle oder Verpackung verlaufenden Strahlern.

So erfolgt im Koppelbereich der Dipolantenne eine Stromkopplung zwischen der Koppelschleife des Detektierplättchens und dem niederohmigen Bereich der Dipolantenne, die parallel zur Beschichtung des Datenträgers verlaufenden Bereiche der Dipolantenne wirken überwiegend als Speiseleitung und elektrische Verlängerung der Strahler und die längs der Kanten der Hülle oder Verpackung verlaufenden Strahler stellen schließlich die auf die Resonanzfrequenz abgestimmten strahlenden Elemente der Dipolantenne dar.

Alternativ kann die Verstärkerantenne als Schlitzantenne ausgebildet sein, wobei der Schlitz durch den zentrischen unbeschichteten Bereich des Datenträgers selbst gebildet ist.

An sich ist eine Schlitzantenne durch einen schmalen Schlitz in einer elektrisch leitfähigen Umgebung charakterisiert, wobei die Länge des Schlitzes einem Ein- oder Mehrfachen einer Viertelwellenlänge der Resonanzfrequenz der Schlitzantenne entspricht. Im vorliegenden Fall ist die elektrisch leitfähige Umgebung durch die metallische Beschichtung des Datenträgers selbst gebildet und der Schlitz ist zu dem kreisförmigen, nicht beschichteten Zentrum des Datenträgers aufgeweitet.

Dieses von der Norm des Datenträgers vorgegebene Design legt zwangsläufig die beeinflussbaren Grenzen der Resonanzfrequenz der durch die Beschichtung des Datenträgers gebildeten Schlitzantenne fest. Allerdings ist durch die Form des Schlitzes als kreisförmiges unbeschichtetes Zentrum bereits eine erhöhte Breitbandigkeit der Schlitzantenne gegenüber einem schmalen, länglichen Schlitz gegeben. Darüber hinaus lässt sich die Resonanzfrequenz der Schlitzantenne auch durch das Design und den Koppelgrad der Koppelschleife in Grenzen beeinflussen.

Versuche und Berechnungen haben gezeigt, dass trotz einer verbleibenden Fehlanpassung im Frequenzbereich zwischen 800 und 1000 MHz eine Lesereichweite erzielt werden kann, die zumindest der Hälfte der Lesereichweite einer Kopplung mit einer vorbeschriebenen Dipolantenne entspricht, und deutlich höher liegt, als die Lesereichweite der Koppelschleife für sich genommen.

Die Koppelschleife des Detektierplättchens ist vorzugsweise asymmetrisch zur Rotationsachse des Datenträgers angeordnet.

Dadurch wird eine verbesserte Impedanzanpassung zwischen der Koppelschleife und der Schlitzantenne erzielt.

Die Koppelschleife des Detektierplättchens kann ein Spindelloch des Datenträgers umschließen.

Diese Ausführung hat den Vorteil, dass sich Abstandtoleranzen zwischen der Koppelschleife und dem Rand der Beschichtung des Datenträges unkritisch auf den Kopplungsgrad zwischen der Koppelschleife und der Schlitzantenne auswirken und der Massenschwerpunkt des Datenträgers weitgehend erhalten bleibt.

Die Koppelschleife des Detektierplättchens kann auch außerhalb eines Spindellochs des Datenträgers angeordnet sein.

Dadurch lässt sich dass Optimum der Impedanzanpassung zwischen der Koppelschleife des Detektierplättchens und der der Schlitzantenne sehr genau berechnen und einstellen.

Die Koppelschleife des Detektierplättchens kann kreisförmig oder oval geformt sein oder eine Form haben, die auf der gegebenen Fläche eine optimale Anpassung an den Chip und die Schlitzantenne erlaubt.

Dies ermöglicht eine Vereinfachung der Berechnung der Impedanzanpassung zwischen der Koppelschleife und der Schlitzantenne und damit vorhersehbare reproduzierbare Ergebnisse bei der praktischen Umsetzung.

Die Koppelschleife des Detektierplättchens kann nierenförmig geformt und dem Innenkreis der Beschichtung angepasst sein.

Hierdurch lässt sich sowohl ein besonders starker Koppelgrad erzielen und gleichzeitig die Resonanzfrequenz der Schlitzantenne beeinflussen.

Der Koppelschleife des Detektierplättchens kann ein vorzugsweise gleichartig geformtes Gegengewicht spiegelsymmetrisch zu einer durch die Rotationsachse verlaufende Spiegelachse gegenübergestellt sein.

Es ist dadurch möglich, Verlagerungen des Massenschwerpunktes des Datenträgers, hervorgerufen durch die asymmetrische Anordnung des Detektierplättchen zu kompensieren. Weiterhin könnte das Gegengewicht auch als zusätzliches Detektierplättchen ausgebildet sein, das die gleiche Schlitzantenne nutzt.

Die in der Hülle oder Verpackung des Datenträgers angeordnete Dipolantenne kann mit der asymmetrisch zur Rotationsachse des Datenträgers angeordneten Koppelschleife des Detektierplättchens gekoppelt sein.

Ein und dieselbe asymmetrisch zur Rotationsachse des Datenträgers angeordnete Koppelschleife, die ohne Hülle oder Verpackung zur Kopplung mit der Schlitzantenne dient, wird hier zusätzlich zur Kopplung mit der Dipolantenne genutzt, wenn der Datenträger sich in der Hülle oder Verpackung befindet. Allerdings ist der Kopplungsgrad und damit die Lesereichweite von der Drehausrichtung des Datenträgers in der Hülle oder Verpackung und damit der asymmetrisch, also exzentrisch angeordneten Koppelschleife auf dem Datenträger abhängig.

Die in der Hülle oder Verpackung des Datenträgers angeordnete Dipolantenne kann mit der Schlitzantenne des Datenträgers gekoppelt sein.

Bei dieser Ausführung wirkt die Schlitzantenne als Mittler oder parasitäres Element zwischen der Koppelschleife auf dem Datenträger und dem Koppelbereich der Dipolantenne. Der Vorteil dieser Ausführung besteht darin, dass die Lesereichweite von der Ausrichtung des Datenträgers in der Hülle oder Verpackung unabhängig ist.

Die in der Hülle oder Verpackung des Datenträgers angeordnete Dipolantenne kann auch sowohl mit der asymmetrisch zur Rotationsachse des Datenträgers angeordneten Koppelschleife des Detektierplättchens als auch mit der Schlitzantenne des Datenträgers gekoppelt sein.

Bei dieser Ausführung werden die Vorteile einer großen Lesereichweite durch direkte Kopplung mit der Koppelschleife mit den Vorteilen einer von der Ausrichtung des Datenträgers in der Hülle oder Verpackung unabhängigen Kopplung verknüpft.

Alternativ könnten auch bei einem Chip mit mehreren Anschlüssen wenigstens zwei getrennte Koppelschleifen angeschlossen werden, von denen eine zentrisch und die andere exzentrisch auf dem Datenträger angeordnet ist. Die zentrische Koppelschleife ermöglicht dann eine drehpositionsunabhängige Kopplung mit der Dipolantenne und die exzentrische Koppelschleife eine Kopplung mit der Schlitzantenne.

Es ergeben sich so eine Vielzahl von Kombinationsmöglichkeiten der verschiedenen Antennen und damit Lesereichweiten. Ein Datenträger mit dem beschriebenen Detektierplättchen, unabhängig davon, ob die Koppelschleife symmetrisch zum Zentrum des Datenträgers, also konzentrisch, oder asymmetrisch zum Zentrum des Datenträgers, also exzentrisch angeordnet ist, und unabhängig davon, ob eine Verstärkerantenne mit der Koppelschleife gekoppelt ist, besitzt der Datenträger durch die Koppelschleife des Detektierplättchens stets eine eigenständige magnetische Antenne, die im Nahfeld mit einer magnetischen Leseantenne gelesen werden kann. In der Nähe befindliche elektrisch leitfähige Gegenstände bewirken nur eine geringfügige, praktisch vernachlässigbare Dämpfung. Somit ist ein Lesekontakt mit einer magnetischen Lesantenne im Nahfeld unter praktischen Bedingungen gewährleistet. Die hiermit verknüpfte geringe Lesereichweite hat den Vorteil, dass Einflüsse benachbarter Datenträger gering sind und Lesegeräte entweder ohne Antikollisionsverfahren auskommen, oder bei Anwendung eines Antikollisionsverfahren nur wenig Kollisionen berücksichtigen müssen und für einen sicheren Lesevorgang nur eine kurze Zeit benötigt wird.

Ein Datenträger, bei dem die durch den Datenträger selbst gebildete Schlitzantenne als Verstärkerantenne dient, kann im Fernfeld zusätzlich mit einer magnetischen oder elektrischen Leseantenne gelesen werden. Als Lesereichweite des so ausgestalteten Datenträgers, also ohne jeglichen materiellen Mehraufwand und ohne Datenträgerhülle oder Verpackung konnte hier etwa die Hälfte der maximalen Lesereichweite nachgewiesen werden, wie sie sonst nur mit einer separaten, als Dipolantenne ausgebildeten Verstärkerantenne in einer Hülle oder Verpackung des Datenträgers erzielt werden konnte. Durch diese Lesevariante können somit Manipulationsversuche aufgedeckt werden, bei denen ein Datenträger aus der Hülle entfernt wird in der Annahme, dadurch könne die Lesbarkeit im Fernfeld beseitigt werden.

Ein Datenträger mit dem beschriebenen Detektierplättchen, unabhängig davon, ob die Koppelschleife symmetrisch zum Zentrum des Datenträgers, also konzentrisch, oder asymmetrisch zum Zentrum des Datenträgers, also exzentrisch angeordnet ist und der in einer Hülle oder Verpackung mit einer als separate Dipolantenne ausgebildeten Verstärkerantenne gekoppelt ist, erreichte im Fernfeld die maximale Lesereichweite, wie sie auch mit Standarddetektierplättchen erreicht werden kann. Diese Lesereichreichweite war weitgehend unabhängig davon, ob die Dipolantenne ausschließlich oder in Kombination mit der Schlitzantenne als Verstärkerantenne diente und ob die Schlitzantenne als zusätzlicher Koppler zwischen der Koppelschleife und der Schlitzantenne wirkte.

Im Übrigen sind die Zahlenangaben der Lesereichweite lediglich Messwerte eine Versuchsanordnung. Durch Einsatz von Leserichtantennen, einer Erhöhung der Lesesendeleistung und der Empfängerempfindlichkeit sind auch höhere Lesereichweiten möglich.

In einer weiteren Ausführung kann die Datenträgerhülle als Buch mit einer Tasche ausgebildet sein, in oder auf einer Einbandseite oder einem Buchdeckel eine mit der Koppelschleife des Detektierplättchens des Datenträgers gekoppelte Dipolantenne angeordnet sein und in oder auf der Einbandseite oder dem Buchdeckel ein weiteres Detektierplättchen angeordnet sein, das mit derselben Dipolantenne gekoppelt ist.

Nachfolgend wird die Erfindung anhand von Ausführungsbeispielen erläutert, die in der Zeichnung dargestellt sind. In der Zeichnung zeigen:
- Fig. 1: einen Rotationsdatenträger mit einem Detektierplättchen aus einem Chip und einer zentrischen Koppelschleife,
- Fig. 2: eine Datenträgerhülle mit einer Dipolantenne aus einer zentralen Schleife, Speise- und Anpassbereichen und abgewinkelten Strahlern,
- Fig. 3: eine Datenträgerhülle mit einer Dipolantenne aus einem Koppelbereich, Speiseund Anpassbereichen und gegensinnig angeordneten Strahlern,
- Fig. 4: eine Datenträgerhülle mit einer Dipolantenne aus einem Koppelbereich, Speiseund Anpassbereichen und gleichsinnig angeordneten Strahlern,
- Fig. 5: einen Rotationsdatenträger mit einem Detektierplättchen aus einem Chip und einer exzentrischen, ein Spindelloch umschließenden Koppelschleife,
- Fig. 6: einen Rotationsdatenträger mit einem Detektierplättchen aus einem Chip und einer exzentrischen, außerhalb eines Spindellochs angeordneten Koppelschleife,
- Fig. 7: einen Rotationsdatenträger mit einem Detektierplättchen aus einem Chip und einer exzentrischen, außerhalb eines Spindellochs angeordneten Koppelschleife in nierenförmiger Gestalt und einem Gegengewicht und
- Fig. 8: eine als Buch mit einer Tasche ausgebildete Datenträgerhülle mit einer Dipolantenne aus einer zentralen Schleife, Speise- und Anpassbereichen und Strahlern,

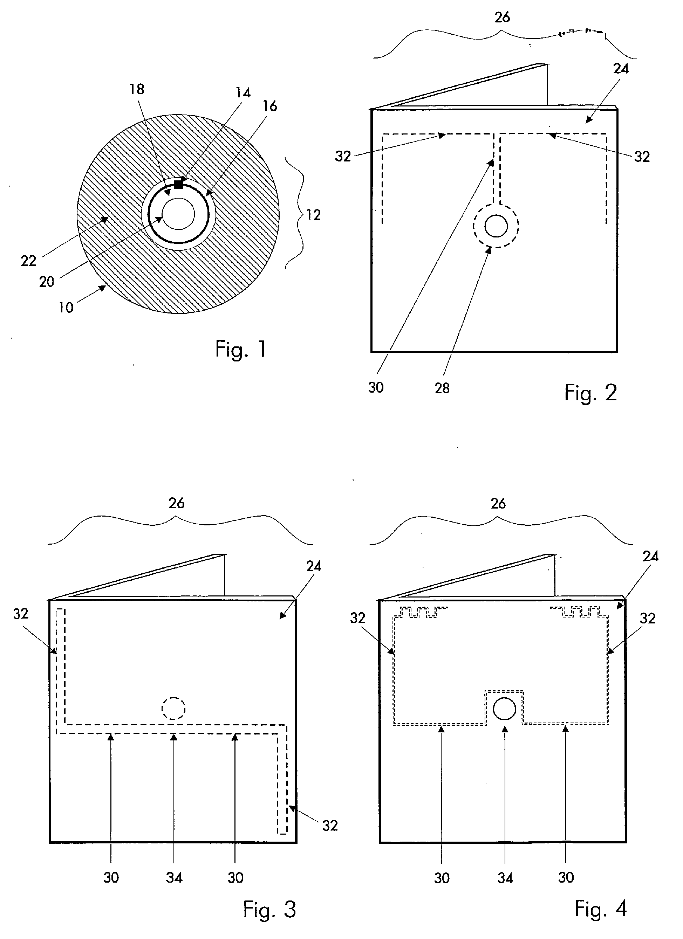

Fig. 1 zeigt einen Rotationsdatenträger 10 mit einem Detektierplättchen 12 aus einem Chip 14 und einer mit dem Chip 14 verbundenen zentrischen Koppelschleife 16. Der Chip 14 mit der Koppelschleife 16 befindet sich auf einer Kunststofffolie 18, die auf das unbeschichtete Zentrum 20 des Datenträgers 10 aufgeklebt ist. Die Koppelschleife 16 für sich bildet eine kleine magnetische Antenne für die magnetischen Komponenten eines elektromagnetischen Feldes und wird durch umgebende leitfähige Bestandteile, nämlich eine metallische Beschichtung 22 des Datenträgers 10 nur unwesentlich in ihren Strahlungseigenschaften beeinflusst. Die Koppelschleife 16 kann daher im Nahfeld direkt mit einer magnetischen Leseantenne gekoppelt werden oder über einen niederohmigen Koppelbereich einer passiven Verstärkerantenne mit dieser Verstärkerantenne gekoppelt und im Fernfeld mit einer magnetischen oder elektrischen Leseantenne gelesen werden.

Fig. 2 zeigt eine Datenträgerhülle 24 mit einer als Verstärkerantenne ausgeführten Dipolantenne 26 aus einer zentralen Schleife 28, Speise- und Anpassbereichen 30 und abgewinkelten Strahlern 32. Ist der Datenträger 10 mit dem Detektierplättchen 12 gemäß Fig. 1 in die Datenträgerhülle 24 nach Fig. 2 eingesetzt, wird die Koppelschleife 16 des Detektierplättchens 12 mit der zentralen Schleife 28 der Dipolantenne 26 gekoppelt und die zentrale Schleife 28 wiederum über die parallel und plan zur Beschichtung 22 des Datenträgers 10 verlaufenden, als Speise- und Anpassbereiche 30 wirkenden Teile der Dipolantenne 26 mit den eigentlichen Strahlern 32 der Dipolantenne 26 verbunden. Diese Strahler 32 verlaufen am Rande der Datenträgerhülle 24 und knicken symmetrisch an den Ecken ab, wo sie wiederum am Rande der Datenträgerhülle 24 auslaufen.

Im Randbereich der Datenträgerhülle 24 besteht ein ausreichender Abstand zur Beschichtung 22, so dass die Dipolantenne 26 hier die elektrischen Komponenten eines elektromagnetischen Feldes empfangen oder abstrahlen kann.

Fig. 3 zeigt eine Datenträgerhülle 24 mit einer ersten Variante der Dipolantenne 26. Diese besteht aus einem geraden zum Zentrum versetzten Koppelbereich 34, Speise- und Anpassbereichen 30 und gegensinnig angeordneten Strahlern 32.

Fig. 4 zeigt eine Datenträgerhülle 24 mit einer zweiten Variante der Dipolantenne 26. Diese besteht ebenfalls aus einem zum Zentrum versetzten Koppelbereich 34, Speise- und Anpassbereichen 30 aber gleichsinnig angeordneten Strahlern 32. Die Strahler 32 verlaufen an der in Fig. 4 gezeigten linken und rechten Seite der Datenträgerhülle 24 zunächst aufwärts, knicken an den oberen Ecken rechtwinklig ab und erstrecken sich noch teilweise entlang der Oberseite der Datenträgerhülle 24. Zur elektrischen Verlängerung sind die Enden der Strahler 32 mäanderförmig ausgestaltet.

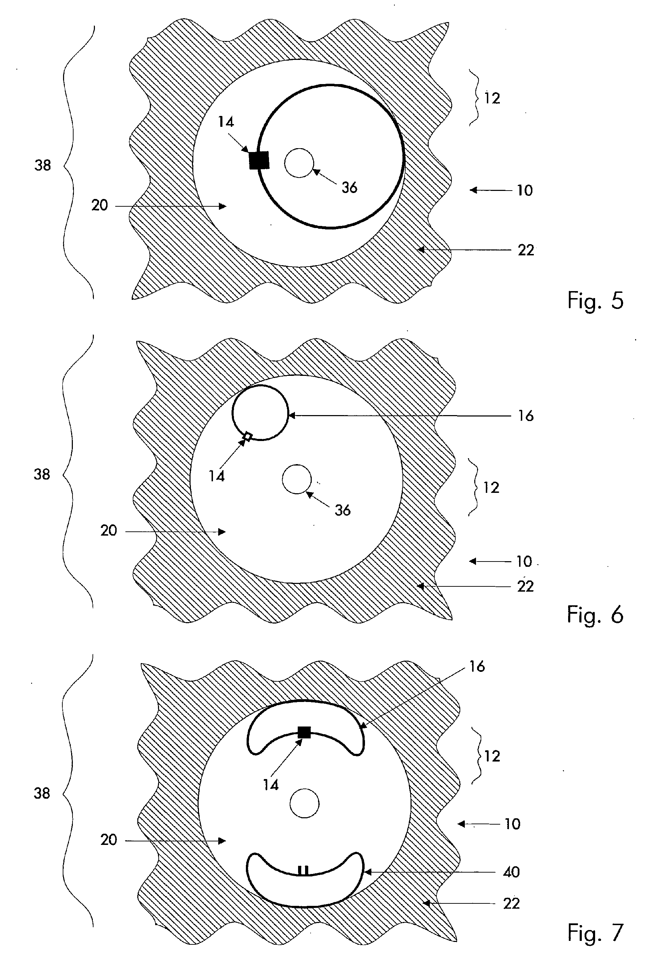

Fig. 5 zeigt einen Rotationsdatenträger 10 mit einem Detektierplättchen 12 aus einem Chip 14 und einer exzentrischen, ein Spindelloch 36 umschließenden Koppelschleife 16. Eine mit der Koppelschleife 16 gekoppelte Verstärkerantenne ist hier durch eine Schlitzantenne 38 dargestellt, die durch die Beschichtung 22 des Datenträgers 10 in Verbindung mit dem kreisförmigen unbeschichteten Zentrum 20 des Datenträgers 10 selbst gebildet ist. Das kreisförmige unbeschichtete Zentrum 20 des Datenträgers 10 stellt einen ausgeweiteten Schlitz dar, dessen niederohmiger Bereich mit der Koppelschleife 16 des Detektierplättchens 12 gekoppelt ist. Da der gesamte Innenumfang des kreisförmigen unbeschichteten Zentrums 20 des Datenträgers 10 als gleichwertiger niederohmiger Bereich anzusehen ist, kommt eine Kopplung bereits zustande, wenn die Koppelschleife 16 lediglich exzentrisch zur Rotationsachse des Datenträgers 10 angeordnet ist. Der Kopplungsgrad und die Impedanzanpassung kann dann durch das Maß der Exzentrizität und die Gestaltung der Koppelschleife 16 eingestellt werden.

Fig. 6 zeigt einen Rotationsdatenträger 10 mit einem Detektierplättchen 12 aus einem Chip 14 und einer ersten Variante der exzentrischen Koppelschleife 16. Die Köppelschleife 16 mit kreisförmiger Gestalt ist hier außerhalb eines Spindellochs 36 angeordnet.

Fig. 7 zeigt einen Rotationsdatenträger 10 mit einem Detektierplättchen 12 aus einem Chip 14 und einer zweiten Variante der exzentrischen Koppelschleife 16. Die Koppelschleife 16 ist hier ebenfalls außerhalb eines Spindellochs 36 angeordnet, besitzt aber eine nierenförmige Gestalt, die an den Innenumfang der Beschichtung 22 angepasst ist. Außerdem ist der Koppelschleife 16 ein gleichartig geformtes Gegengewicht 40 zugeordnet, das spiegelsymmetrisch zu einer durch die Rotationsachse verlaufende Spiegelachse angeordnet ist.

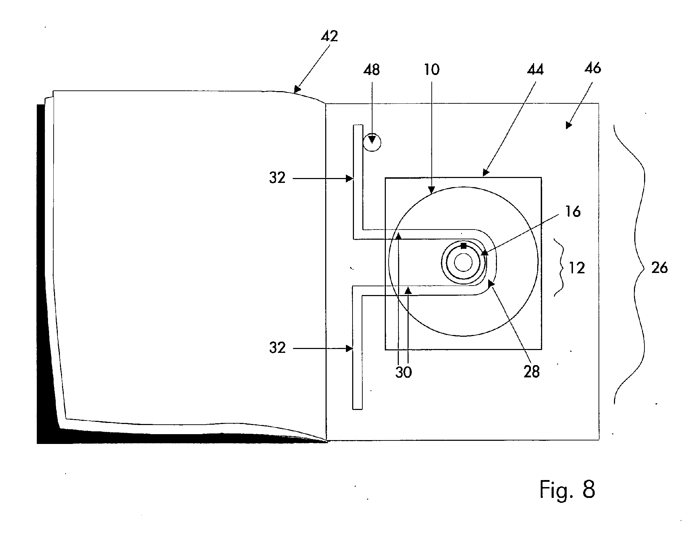

Fig. 8 zeigt eine als Buch 42 mit einer Tasche 44 ausgebildete Datenträgerhülle mit einer Dipolantenne 26 aus einer zentralen Schleife 28, Speise- und Anpassbereichen 30 und Strahlern 32. Die Dipolantenne 26 befindet sich auf oder in der die Tasche 44 tragenden Einbandseite oder dem Buchdeckel 46. Ähnlich der Ausführung nach Fig. 2 erfolgt eine Kopplung zwischen der Koppelschleife 16 des Detektierplättchens 12 auf dem Datenträger 10 mit der zentralen Schleife 28 der Dipolantenne 26, wenn der Datenträger 10 in der Tasche 44 steckt. Ergänzend kann auch die Einbandseite oder der Buchdeckel 46 mit einem eigenen Detektierplättchen 48 ausgestattet sein, das mit derselben Dipolantenne 26 gekoppelt ist. Durch Einsatz eines üblichen Antikollisionsverfahrens können beide Detektierplättchen 12; 48 unabhängig voneinander gelesen werden.

Die erfindungsgemäße Ausgestaltung ermöglicht folgende Anwendungen im Handel, in Bibliotheken und Archiven.

Aufgrund der großen Lesereichweite können Inventuren des Datenträgerbestandes vorgenommen werden, ohne dass dazu die Datenträger aus der Hülle, aus Verpackungen oder Regalen entnommen werden müssen. Benachbarte Datenträger, deren Detektierplättchen sich im selben Lesefeld befinden, können durch ein übliches Antikollisionsverfahren unterschieden werden.

Trotz kleinerer Bauformen im Vergleich zu Büchern lässt sich auch bei reinen Datenträgern oder in Hüllen aufbewahrten Datenträgern eine ähnlich hohe Lesereichweite erzielen.

Datenträger mit Detektierplättchen kleiner Lesereichweite können in Verbindung mit Hüllen oder Verpackungen in der Lesereichweite erhöht werden.

Bei Nutzung des Datenträgers als Schlitzantenne kann die Lesereichweite ohne materiellen Mehraufwand gegenüber der Lesereichweite des reinen Detektierplättchens deutlich erhöht werden. Verdeckte oder herumliegende Datenträger können aufgespürt werden.

Durch begrenzte Auswertung des Nahfeldes innerhalb eines Regals kann die Entnahme von Datenträgern registriert und anschließend durch Auswertung des Fernfeldes der weitere Transport überwacht werden. So lässt sich feststellen, ob ein Datenträger anschließend ordnungsgemäß im Kassen- oder Ausleihbereich registriert und ausgecheckt wird oder entwendet werden soll. Selbst Manipulationen durch Einwickeln eines Datenträgers in abschirmendes Material können aufgedeckt werden, indem durch lückenlose großräumige Überwachung eine Unterbrechung des Lesekontakts zu einem Datenträger festgestellt wird, ohne dass dieser ordnungsgemäß im Kassen- oder Ausleihbereich nach Registrierung ausgecheckt wurde.

## Patentansprüche

1. Rotationsdatenträger (10) mit Detektierplättchen (12), **dadurch gekennzeichnet, dass** das Detektierplättchen (12) aus einem Chip (14) und einer mit dem Chip (14) verbundenen magnetischen Koppelschleife (16) besteht, das auf dem zentralen, nicht beschichteten Bereich (20) des Datenträgers (10) angeordnet ist.

2. Rotationsdatenträger (10) mit Detektierplättchen (12) nach Anspruch 1, **dadurch gekennzeichnet, dass** das Detektierplättchen (12) auf einer Kunststofffolie (18) angeordnet ist, die mit dem Datenträger (10) verklebt ist.

3. Rotationsdatenträger (10) mit Detektierplättchen (12) nach Anspruch 1 oder 2, **dadurch gekennzeichnet, dass** die Koppelschleife (16) des Detektierplättchens (12) mit einer Verstärkerantenne gekoppelt ist.

4. Rotationsdatenträger (10) mit Detektierplättchen (12) nach Anspruch 3, **dadurch gekennzeichnet, dass** die Verstärkerantenne als Dipolantenne (26) ausgebildet ist.

5. Rotationsdatenträger (10) mit Detektierplättchen (12) nach Anspruch 4, **dadurch gekennzeichnet, dass** die Dipolantenne (26) in einer Hülle (24) oder Verpackung des Datenträgers (10) angeordnet ist.

6. Rotationsdatenträger (10) mit Detektierplättchen (12) nach Anspruch 5, **dadurch gekennzeichnet, dass** die Dipolantenne (26) nicht sichbar auf einer Rückseite eines bedruckten Inlays der Hülle (24), auf der Rückseite der Halterung des Datenträgers in der Hülle (24) oder auf einem zwischen der Halterung des Datenträgers und dem bedruckten Inlay der Hülle (24) eingelegten Antennenträger angeordnet ist.

7. Rotationsdatenträger (10) mit Detektierplättchen (12) nach einem der Ansprüche 4 bis 6, **dadurch gekennzeichnet, dass** die Dipolantenne (26) aus einem im Zentrum oder nahe des Zentrums der Hülle (24) oder Verpackung verlaufenden Koppelbereich (28; 34) und längs der Kanten der Hülle (24) oder Verpackung verlaufenden Strahlern (32) besteht.

8. Rotationsdatenträger (10) mit Detektierplättchen (12) nach Anspruch 4, **dadurch gekennzeichnet, dass** die Verstärkerantenne als Schlitzantenne (38) ausgebildet ist, wobei der Schlitz durch den zentrischen unbeschichteten Bereich (20) des Datenträgers (10) selbst gebildet ist.

9. Rotationsdatenträger (10) mit Detektierplättchen (12) nach Anspruch 8, **dadurch gekennzeichnet, dass** die Koppelschleife (16) des Detektierplättchens (12) asymmetrisch oder exzentrisch zur Rotationsachse des Datenträgers (10) angeordnet ist.

10. Rotationsdatenträger (10) mit Detektierplättchen (12) nach Anspruch 8 oder 9, **dadurch gekennzeichnet, dass** die Koppelschleife (16) des Detektierplättchens (12) ein Spindelloch (36) des Datenträgers (10) umschließt.

11. Rotationsdatenträger (10) mit Detektierplättchen (12) nach Anspruch 8 oder 9, **dadurch gekennzeichnet, dass** die Koppelschleife (12) des Detektierplättchens (12) außerhalb eines Spindellochs (32) des Datenträgers (10) angeordnet ist.

12. Rotationsdatenträger (10) mit Detektierplättchen (12) nach einem der Ansprüche 8 bis 11, **dadurch gekennzeichnet, dass** die Koppelschleife (16) des Detektierplättchens (12) kreisförmig oder oval geformt ist oder eine Form hat, die auf der gegebenen Fläche eine optimale Anpassung an den Chip (14) und die Schlitzantenne (38) erlaubt.

13. Rotationsdatenträger (10) mit Detektierplättchen (12) nach einem der Ansprüche 8, 9 oder 11, **dadurch gekennzeichnet, dass** die Koppelschleife (16) des Detektierplättchens (12) nierenförmig geformt und dem Innenkreis der Beschichtung (22) angepasst ist.

14. Rotationsdatenträger (10) mit Detektierplättchen (12) nach Anspruch 13, **dadurch gekennzeichnet, dass** der Koppelschleife (16) des Detektierplättchens (12) ein vorzugsweise gleichartig geformtes Gegengewicht (40) spiegelsymmetrisch zu einer durch die Rotationsachse des Datenträgers (10) verlaufende Spiegelachse gegenübergestellt ist.

15. Rotationsdatenträger (10) mit Detektierplättchen (12) nach einem der Ansprüche 4 bis 7, **dadurch gekennzeichnet, dass** die in der Hülle (24) oder Verpackung des Datenträgers (10) angeordnete Dipolantenne (26) mit der asymmetrisch zur Rotationsachse des Datenträgers (10) angeordneten Koppelschleife (16) des Detektierplättchens (12) gekoppelt ist.

16. Rotationsdatenträger (10) mit Detektierplättchen (12) nach einem der Ansprüche 4 bis 8, **dadurch gekennzeichnet, dass** die in der Hülle (24) oder Verpackung des Datenträgers (10) angeordnete Dipolantenne (26) mit der Schlitzantenne (38) des Datenträgers (10) gekoppelt ist.

17. Rotationsdatenträger (10) mit Detektierplättchen (12) nach einem der Ansprüche 4 bis 14, **dadurch gekennzeichnet, dass** die in der Hülle (24) oder Verpackung des Datenträgers (10) angeordnete Dipolantenne (26) sowohl mit der asymmetrisch zur Rotationsachse des Datenträgers (10) angeordneten Koppelschleife (16) des Detektierplättchens (12) als auch mit der Schlitzantenne (38) des Datenträgers (10) gekoppelt ist.

18. Rotationsdatenträger (10) mit Detektierplättchen (12) nach einem der Ansprüche 4 bis 17, **dadurch gekennzeichnet, dass** Hülle als Buch (42) mit einer Tasche (44) ausgebildet ist, dass in oder auf einer Einbandseite oder einem Buchdeckel (46) eine mit der Koppelschleife (16) des Detektierplättchens (12) gekoppelte Dipolantenne (26) angeordnet ist und dass in oder auf der Einbandseite oder dem Buchdeckel (46) ein weiteres Detektierplättchen (48) angeordnet ist, das mit derselben Dipolantenne (26) gekoppelt ist.
